# EUROPEAN PATENT APPLICATION

(11) **EP 1 191 429 A2**
(43) Date of publication of application: **27.03.2002**
(21) Application number: 01308047.8
(22) Date of filing: 21.09.2001
(51) Int. Cl.: G06F 3/023, G06F 3/033, G06K 11/18

(54) **Integrated mouse or trackball assembly**

(30) Priority: 22.09.2000 CN 00124585
(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(57) **Abstract**

An integrated mouse or trackball assembly system whereof the receiver comprises a wired interface for the mouse or trackball device, or else a wireless receiver coupled to wire or wireless outputting relay keyboard, associated with relevant structures optionally for coupling in the right-hand, left-hand or otherwise direction, with wired or wireless relay keyboard serving as a receiver for the mouse or trackball device, and an operational relay with the main unit, the wireless coupling being wireless transmission executed through ultrared ray or supersonic wave to safeguard freedom of separate operation, achieving minimization of wire or cord in use and overall length of same, a clean and neat desktop layout of a mess or wire entanglement, whereby component to component shielding and interference is avoided or minimized, conductive to the build up of a rationalized and ideal operation environment.

## Description

### BACKGROUND OF THE INVENTION

### (a) Field of the Invention

Assembly of mouse with trackball device permitting selection of the position of a receiver rationalized to provide a rational and neat, simplified desktop layout, said mouse or trackball device being a board-type interface executed in electrical mechanical, photo-electrical, sensitizer, piezoelectric, capacitor, static, with or without a ball.

### (b) Description of the Prior Art:

For quite some time, either keyboard or mouse or a trackball makes for a control interface for simple input of computerized data, and traditionally, linkage of a computer main unit with the keyboard or mouse or trackball, is executed by a wired or wireless means, with the wired linkage mode executed by having an independent leader run from the keyboard or mouse or trackball individually to the computer main unit, or instead the keyboard and the mouse or the trackball is built integral with the main unit. As to the wireless mode of coupling, the execution is either by way of a built-in receiver or else by external addition of a receiver used symbiotically with or independently for the keyboard with the mouse or trackball, coupled through radio transmission, to provide cursor operation function or scroll function or key-in function; a point to note at this juncture is that in the case of wired coupling employed for conventional computer main unit in conjunction with keyboard or mouse or trackball, the plurality of leader in use, the relatively longer leader running distance can often result in leaders intertwining each other in a mess, whereas as to wireless coupling mode, the necessity to install more devices compounded with device to device interaction, mutual shielding and interference, not to mentioned elevated costs, is a real nuisance indeed.

### SUMMARY OF THE INVENTION

This invention provides an integrated mouse or trackball assembly system in respect of which the location of the receiver may be determined on user's option, essentially it provides for a receiver device incorporating a wired interface or a cordless receiver to be coupled to the relay keyboard assembly featuring a wired or cordless output capability, complete with mechanism accommodating matching mounting laterally or in otherwise directions, that is, characterized by the provision of a wired or cordless outputting relay keyboard assembly as an operational relay associating the receiver on the mouse or trackball device with the main unit, the wireless transmission including wireless coupling utilizing ultrared ray or supersonic wave, alternatively, to allow for freedom of separate, independent manipulation.

### BRIEF DESCRIPTION OF THE DRAWINGS

Fig. 1 is an illustration of the invention embodied in a wired coupling mode of execution;
Fig. 2 is a side view of what is shown in Fig. 1;
Fig. 3 is an illustration of the invention executed in wireless transmission coupling mode under a first embodiment;
Fig. 4 is a side view of what is shown in Fig. 3;
Fig. 5 is an illustration of the invention executed in wireless transmission coupling mode under a second embodiment;
Fig. 6 is an illustration of the invention executed in wireless transmission coupling mode under a third embodiment;
Fig. 7 is an illustration of the invention executed in wireless transmission coupling mode under a fourth embodiment;
Fig. 8 is a partially taken three-dimensional perspective of the fourth embodiment pursuant to Fig.7;
Fig. 9 is an illustration of the invention executed in wireless transmission coupling mode under a fifth embodiment;
Fig. 10 is a partial three-dimensional perspective of the fifth embodiment pursuant to Fig. 9;
Fig. 11 is an illustration of the invention executed in wireless transmission coupling mode under a sixth embodiment;
Fig. 12 is a partial three-dimensional perspective of the sixth embodiment pursuant to Fig. 11;
Fig. 13 is an illustration of the invention executed in wireless transmission coupling mode under a seventh embodiment;
Fig. 14 is a partial three-dimensional perspective of the seventh embodiment pursuant to Fig. 13;
Fig. 15 is an illustration of the invention executed in wireless transmission coupling mode under an eighth embodiment;
Fig. 16 is an illustration of the invention executed in wireless transmission coupling mode under a ninth embodiment;
Fig. 17 is an illustration of the invention executed in wireless transmission coupling mode under a tenth embodiment;
Fig. 18 is an illustration of the invention executed in wireless transmission coupling mode under an eleventh embodiment;
Fig. 19 is an illustration of the invention executed in wireless transmission coupling mode under a twelfth embodiment;
Fig. 20 is an illustration of the invention executed in wireless transmission coupling mode under a thirteenth embodiment;
Fig. 21 is an illustration of the invention executed in wireless transmission coupling mode under a fourteenth embodiment;
Fig. 22 through Fig. 25 illustrate other embodiments covering ultrared or supersonic wireless mouse or trackball device prosecuted according to the invention;
Fig. 26 illustrates the invention executed in a fifteenth embodiment pursuant to wireless transmission mode;
Fig. 27 illustrates the invention executed in a sixteenth embodiment pursuant to the wireless transmission mode;
Fig. 28 illustrates the invention executed in a seventeenth embodiment pursuant to wireless transmission mode;
Fig. 29 illustrates the invention executed in an eighteenth embodiment pursuant to the wireless transmission mode; and
Fig. 30 illustrates the invention executed in a nineteenth embodiment pursuant to wireless mode of transmission.

### DETAILED DESCRIPTION OF THE PREFERRED EMBODIMENTS

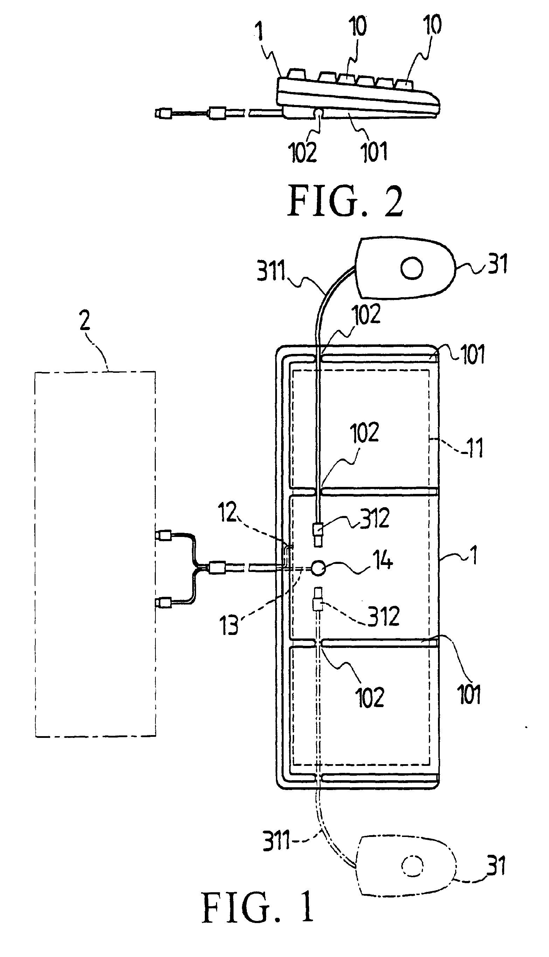

Referring first of all to Fig. 1, and Fig. 2, the invention assembly of mouse with trackball device permitting selection of the position of a chosen receiver, as executed in a wired mode of coupling, and comprising:
- Relay keyboard 1 which consists of operational key 10 on the surface against a corresponding pushkey circuit 11 which is coupled to the main unit 2 by keyboard transmission wire 12, the relay keyboard 1 featuring wire retaining notches 102 on both sides of the bottom chassis 101, pointing leftwards or rightwards;
- Relay wire 13, being furnished on chosen locations inside the relay keyboard 1, lining up side by side with keyboard transmission wire 12 or alternatively coaxially symbiotic with multiple-core cable for extension to the main unit 2 straight or through plug socket coupling technique, and coupling to the relay wire 13 being by means of running one or more, homogenous or dissimilar conventional PS2, USB, SERIES or otherwise special purpose interface socket 14, straight in series or in parallel, way from a central position inside the relay keyboard(Fig.1);
- Independently installed wired mouse or trackball device 31, whereof a plug 312 is provided on the end to which a transmission wire 31 is attached for coupling with aforementioned coupling socket 14;

Structured accordingly, the plug 312 for the independently installed wired mouse or trackball device 31 may be coupled to the coupling socket 14 for the relay wire 13 way from the right side or left side or any otherwise side of the relay keyboard 1, as from the setting point, so that the transmission wire 311 may be retained in the retaining notch 102 on the bottom of the relay keyboard 1, that achieving substantial reduction of the number of wire in use, or the overall length of the transmission wire 311 respecting wired mouse or trackball device 31, and eventually saving desktop from a mess for obvious reasons.

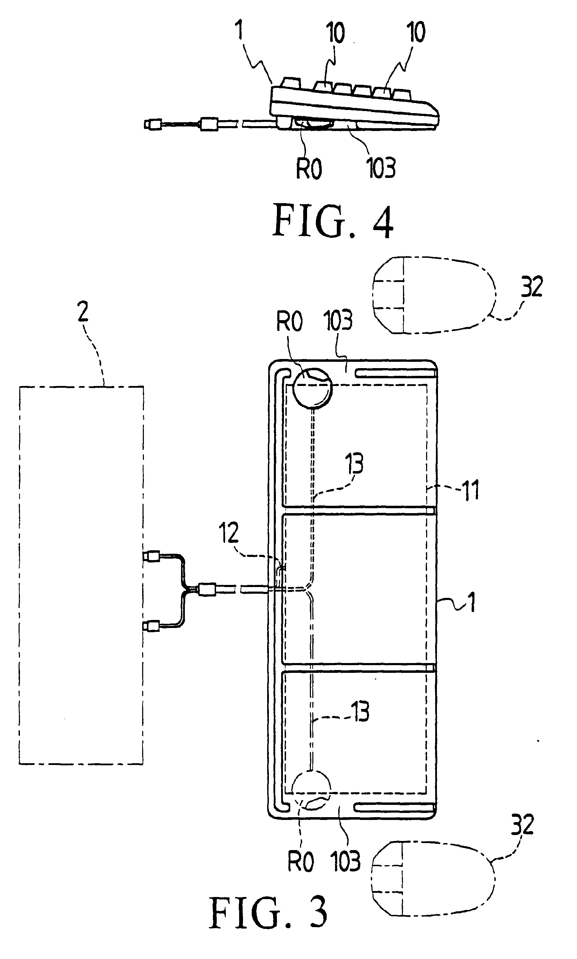

Referring next to Fig. 3 and Fig. 4 altogether, a first embodiment of the invention assembly of mouse with trackball device permitting selection of the position of a chosen receiver, executed in a wireless mode of transmissive coupling, including, for example, ultrared or supersonic transmission, comprising:
- Relay keyboard 1 which consists of operational key 10 on the surface against a corresponding key circuit 11 which is coupled to the main unit 2 by way of a keyboard transmission wire 12, and the relay keyboard 1 featuring a notch 10 to facilitate wireless transmission on either side, or both sides of the chassis bottom whereof;
- Relay wire 13, concealed in a chosen position inside the relay keyboard 1, with one end thereof coupled to the ultrared or supersonic receiver R0, the other end thereof lining up side by side with keyboard transmission wire 12 or coaxial with a multiple-core cable for extension straight or by way of plug/socket assembly to the main unit 2, the relay wire 13 being available for coupling to either side of the relay keyboard 1, left or right, optionally from a point within the housing of the relay keyboard 1, aforementioned ultrared or supersonic receiver R0 being coupled to the right side or left side of the relay keyboard 1 for ultimate coupling to the wireless transmission notch 103 where signal be it ultrared or supersonic wireless mouse or trackball device 32 is received;
- Independently installed ultrared or supersonic wireless mouse or trackball device 32;

Structured accordingly, signal from ultrared or supersonic emission circuit sourced to the independently installed ultrared or supersonic wireless mouse or trackball device 32 may be emitted to aforementioned supersonic or ultrared device R0, accomplishing thereby wireless coupling whereof keyboard 1 serves as an operational relay, avoided altogether are component-to-component shielding and interference, realizing a layout conducive to the creation of a clean wireless transmission desktop environment.

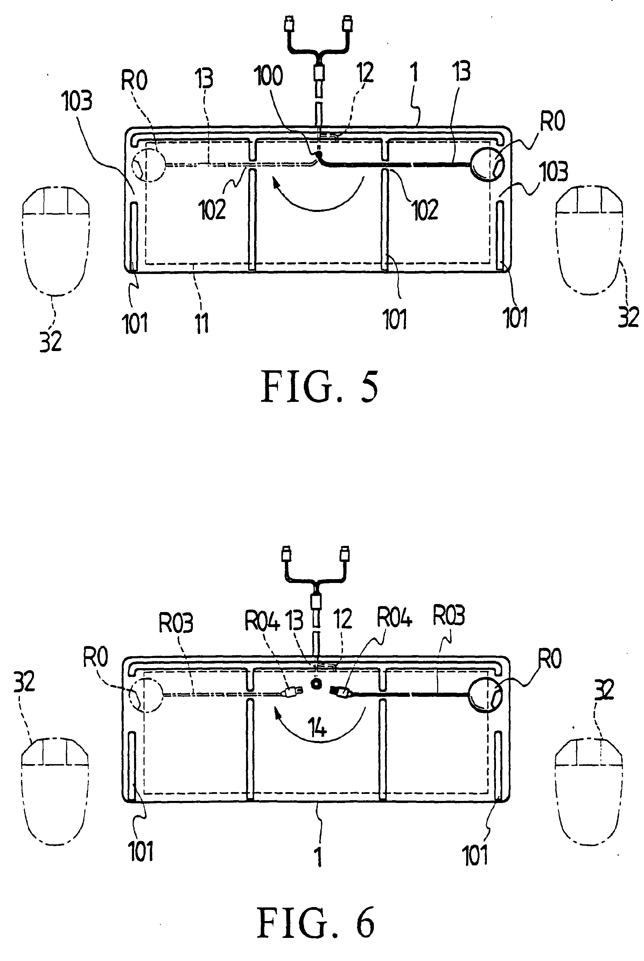

Referring to Fig. 5, a second embodiment executed for wireless coupling of the invention assembly of mouse with trackball device permitting selection of the position of a chosen receiver, ultrared or supersonic, otherwise wireless transmission mode inclusive, comprising:
- Relay keyboard 1 which consists of operational pushkey 10 on the surface against corresponding pushkey circuit 11 built within, said pushkey circuit 11 being coupled to the main unit 2 by a keyboard transmission wire 12, the keyboard 1 further featuring a wire retaining notch 102 on chosen locations on the chassis board 101, complemented with wireless transmission notch 103 provided on either side or both sides of the chassis;
- Relay wire 13, provided exposed on the relay keyboard 1 and as stretched out from the relay keyboard 1, with one end coupled to the ultrared or supersonic receiver R0, and the other end coupled to the main unit 2 by way of passage across hole 100, in parallel with keyboard transmission wire 12, or coaxially by extension with multiple-core cable straight or through plug/socket assembly, the relay wire 13 being retained in position across the retaining notch 102 on the bottom of the relay keyboard 1, while above-mentioned ultrared or supersonic receiver R0 is mounted on the notch 103 on the left side or right side of the relay keyboard 1 to receive signal incoming from the ultrared or supersonic wireless mouse or trackball device 32;
- Independently installed ultrared or supersonic wireless mouse or trackball device.

In a third embodiment of the invention assembly of mouse with trackball device permitting selection of the position of a chosen receiver as executed for wireless coupling as illustrated in Fig. 6, which is based on the relay wire 13 disclosed in the said second embodiment, said relay wire 13 may further dispose of one or more similar or dissimilar, conventional PS2, USB, SERIES or otherwise interface socket 14 may be laid straight or in parallel or by way of coupling interface, in a chosen central position of the relay keyboard with a plug R04 which may be coupled to said coupling socket 14 on one end of the transmission wire R03 of the ultrared or supersonic receiver R0, for optional mounting and coupling to a wireless transmission notch 103 on the right side or left side of the relay keyboard 1, allowing for coupling from the relay wire 13 by way of the socket 14.

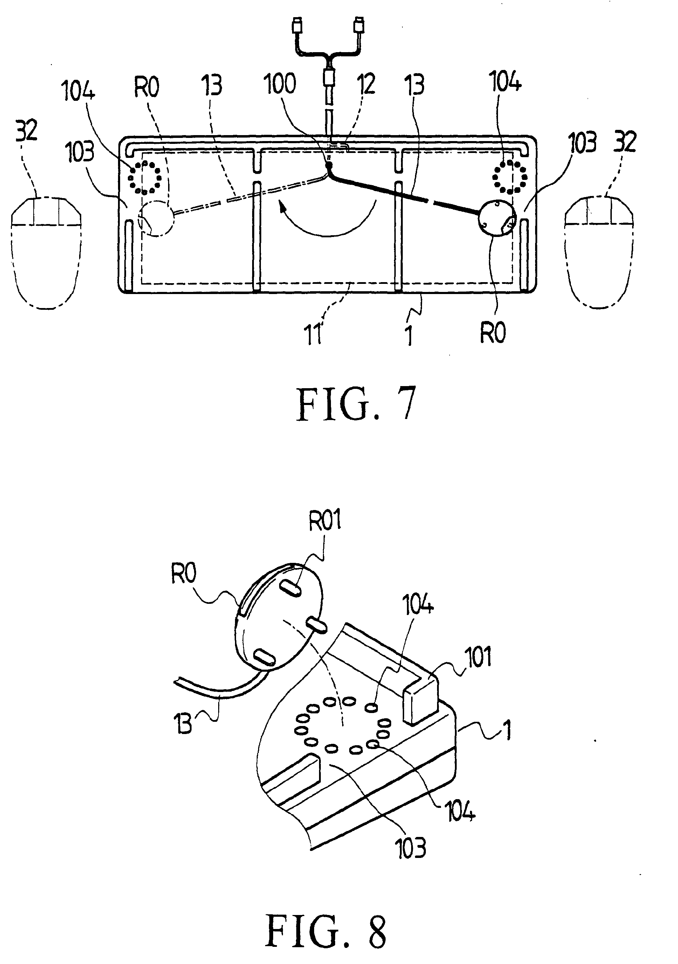

In a fourth embodiment of the invention assembly of mouse with trackball device permitting selection of the position of a chosen receiver as executed for wireless coupling illustrated in Fig. 7 and Fig. 8 as consequential to Fig. 5, characterized that it may further present a plurality of pin-hole 104, laid out geometrically, in annular or otherwise setting, on chosen location on the wireless transmission notches 103 on either or both sides of the relay keyboard 1, and that complemented with one or more correspondent pin-pillar R01 on the bottom of the housing of the ultrared or supersonic receiver R0, so that by matching pin-pillar R01 with pin-hole 104, it is made possible to choose a desired signal pickup direction and to obtain stable securing effects.

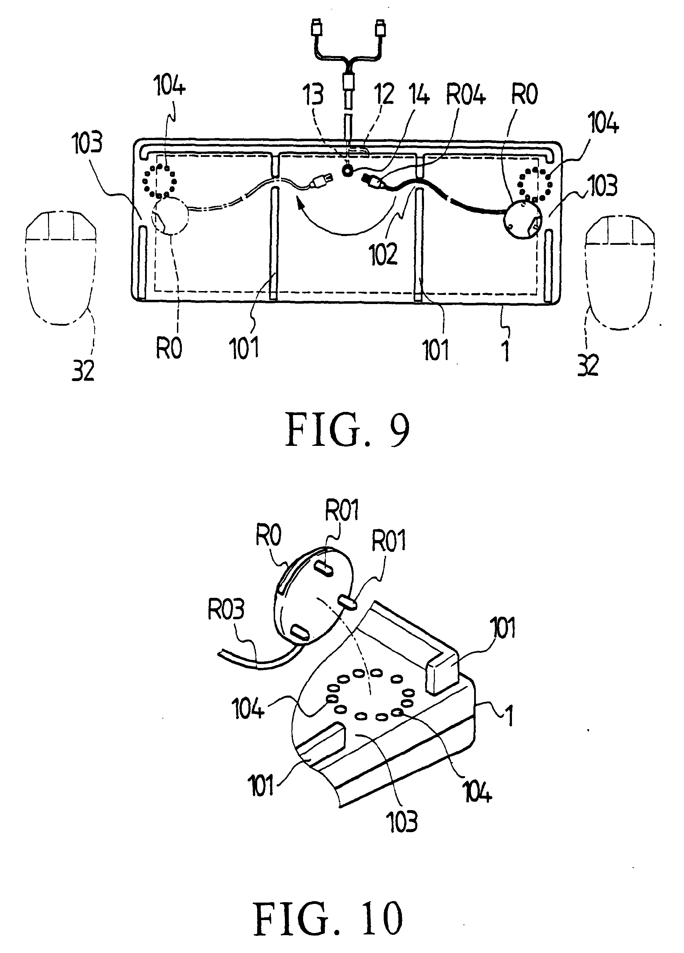

Similarly in the fifth embodiment of the invention assembly of mouse with trackball device permitting selection of the position of a chosen receiver, executed for wireless coupling, as illustrated in Fig. 9 and Fig. 10, consequential to Fig. 6, the feature lies in the presentation of one or more annularly deployed or otherwise geometrically distributed pin-hole 104 on chosen locations on the notch 103 on the right side or left side of the relay keyboard 1, and that complemented with similarly one or more pin-pillar R01 present on the bottom of the housing of independently installed ultrared or supersonic receiver R0, so that random coupling of pin-pillar R01 with pin-hole 104 will serve to set the signal pickup direction, it is further possible to have one or more similar or dissimilar conventional PS2, USB, SERIES or any other special purpose interface socket 14, meant for forthright parallel or coupled interface, laid at a central position inside the relay keyboard 1, to be coupled by a plug R04 provided on one end of the transmission wire R03 of the ultrared or supersonic receiver R0, to facilitate random selection of and coupling to the wireless transmission notch 103 on the left side of right side of the relay keyboard 1 and as associated by the socket 14 with the relay wire 13.

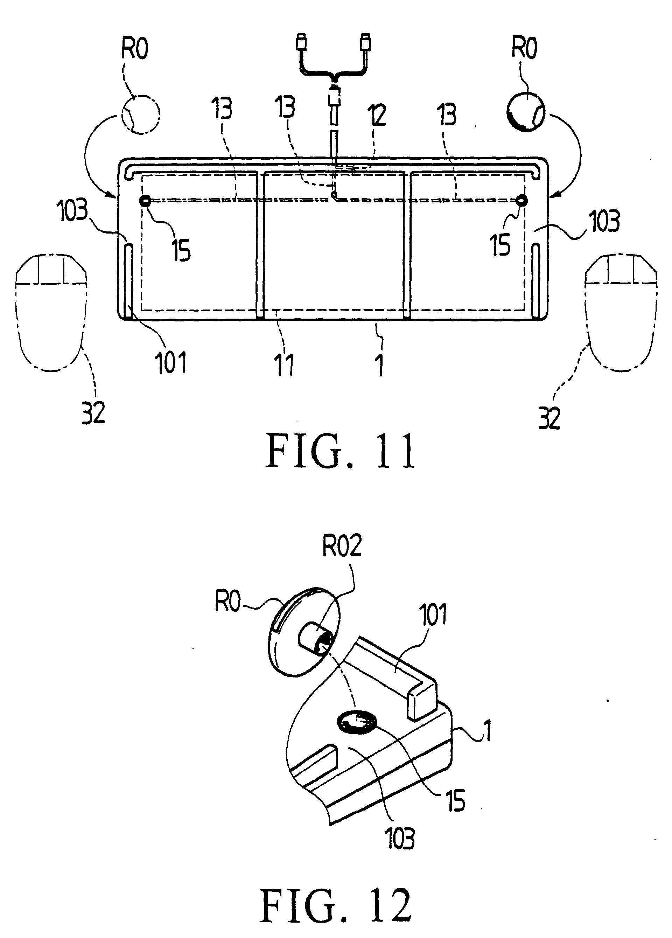

Referring to Fig. 11, Fig. 12 altogether, it is seen that the invention assembly of mouse with trackball device permitting selection of the position of a chosen receiver, as executed in a sixth embodiment incorporating wireless transmission such as ultrared or supersonic wave, comprises essentially:
- Relay keyboard 1 which consists of operational pushkey on the surface corresponded with a pushkey circuit 11 within which in turn is coupled to the main unit 2 by way of a keyboard transmission wire 12, the keyboard 1 further featuring a wireless transmission notch 103 present on either side or both sides of the housing of the relay keyboard 1;
- Relay wire 13, equipped on chosen location within the relay keyboard 1, whereof the mid-terminal lines up side by side with the keyboard transmission wire 12 or, being coaxial with a multiple-core cable, it is extended straight to the main unit 2 or by way of a socket/plug assembly thereto, while the other end of the relay wire 13 is coupled to a chosen location in the neighborhood of the wireless transmission notch 103, where one or more similar or dissimilar conventional PS2, notch 103, USB, SERIES or any other special purpose interface socket 15, meant for direct parallel or roundabout coupling interconnection, are attached for coupling to correspondingly provided PS2, USB, SERIES or other special purpose interface socket 15 on aforementioned right side or left side, by means of an ultrared or supersonic receiver R0 which incorporates PS2, USB, SERIES or other special purpose interface plug R02;
- Independently installed ultrared or supersonic wireless mouse or trackball device 32.

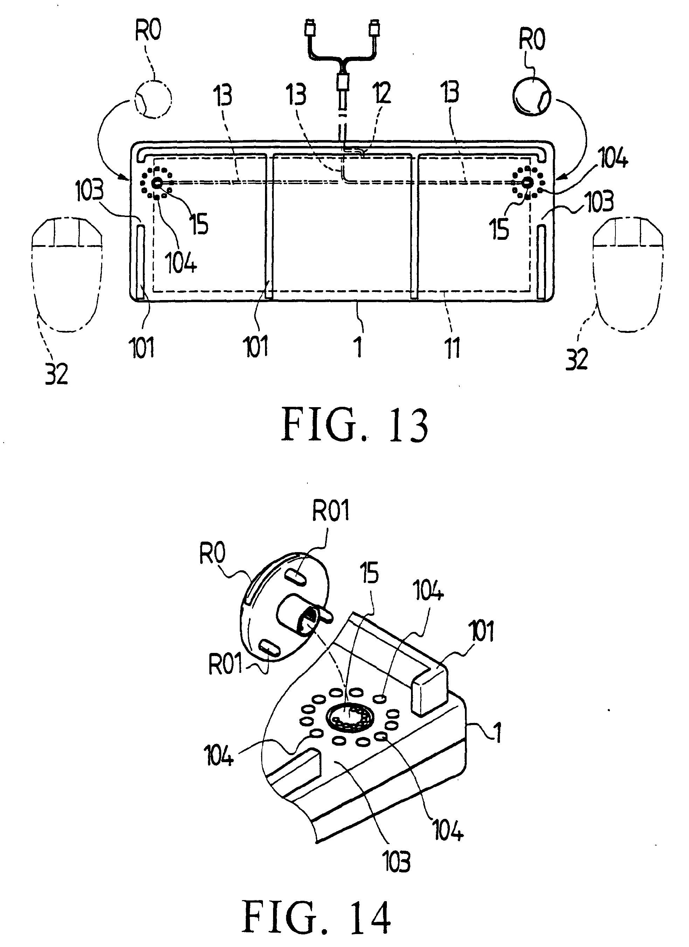

In the seventh embodiment of the invention assembly of mouse with trackball device permitting selection of the position of a chosen receiver, executed for wireless coupling, as illustrated in Fig. 13 and Fig. 14, consequential from Fig. 11 and Fig.12, the feature lies in that on chosen location on the peripheral of the PS2, USB, SERIES or special purpose interface socket 15 associated with the relay keyboard 1 pursuant to the embodiment illustrated in Fig. 11 and Fig. 12 altogether are deployed, in annular layout or otherwise geometrical distribution, a plurality of pin-hole 104, and that corresponded with one or more pin-pillar R01 deployed on the bottom of housing of the ultrared or supersonic receiver R0, so that, by matching said pin-pillar R01 with said pin-pillar R01 with said pin-hole 104, it is possible to random set signal emission angular setting in reliable bonding security.

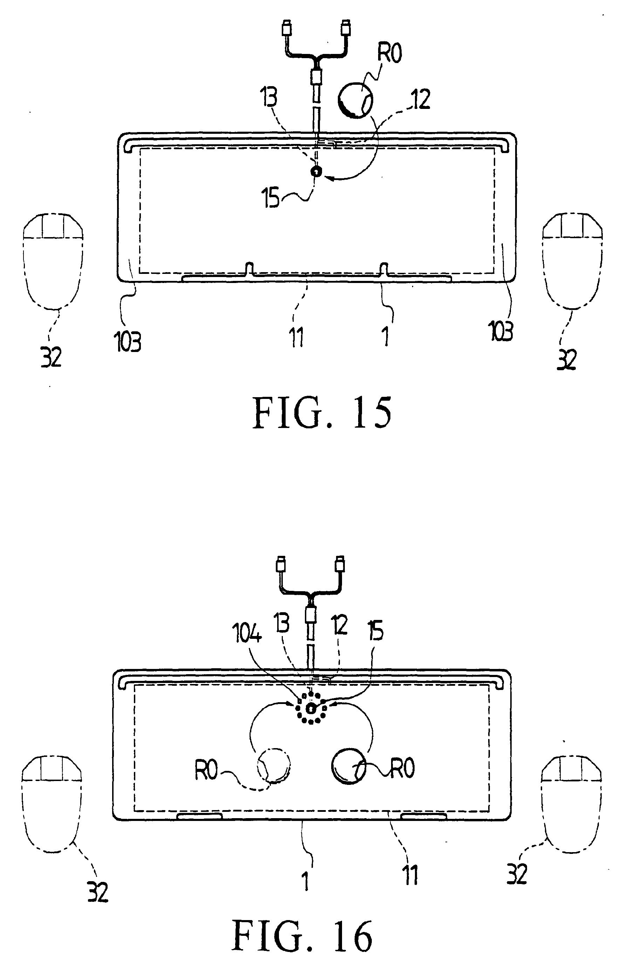

Referring now to Fig. 15, an eighth embodiment of the invention assembly of mouse with trackball device permitting selection of the position of a chosen receiver, applied for wireless coupling, including ultrared, supersonic, otherwise wireless transmission, it is seen to comprise essentially:
- Relay keyboard 1 which consists of an operational pushkey 1 corresponded with a pushkey circuit 11 which is coupled by means of a keyboard transmission wire 12 to the main unit 2, the keyboard 1 allowing for a more spacious space reserved for a greater wireless transmission notch 103 on wither side or both sides of the bottom of the housing of the relay keyboard 1;
- Relay wire 13 mounted at a chosen location within the relay keyboard 1, with one end lining up side by side with keyboard transmission wire 12, or, being coaxial with a multiple-core cable for extension to or by way of a plug/socket assembly to the main unit 2, while the other end is coupled to a similar or dissimilar, conventional PS2, USB, SERIES or other special purpose interface socket 15, straight in parallel or through interface coupling technique, said PS2, USB, SERIES or other special purpose interface socket 15 being available for mounting centrally on the relay keyboard 1 or any other chosen location where needed, which in addition, is fit for insert coupling with any ultrared or supersonic pickup receiver R0 furnished with a counterpart plug R02 corresponding thereto(as shown in Fig. 14);
- Independently installed ultrared or supersonic wireless mouse or trackball device 32.

In what is shown in Fig. 16, a ninth embodiment of the invention assembly of mouse with trackball device permitting selection of the position of a chosen receiver, as executed for wireless coupling, consequential to Fig. 15, the feature lies in the presentation of a plurality of pin-hole 104, in annular or otherwise geometric layout, on chosen location around the PS2, USB, SERIES or otherwise special purpose socket 15 of the relay keyboard 1, complemented with one or more pin-pillar R01, identical to what is shown in Fig. 14, on correspondent locations on the bottom of housing of the ultrared or supersonic receiver R0, so that coupling of both pin-pillar R01 and pin-hole 104 with each other will suffice to random set signal emission direction in stable security.

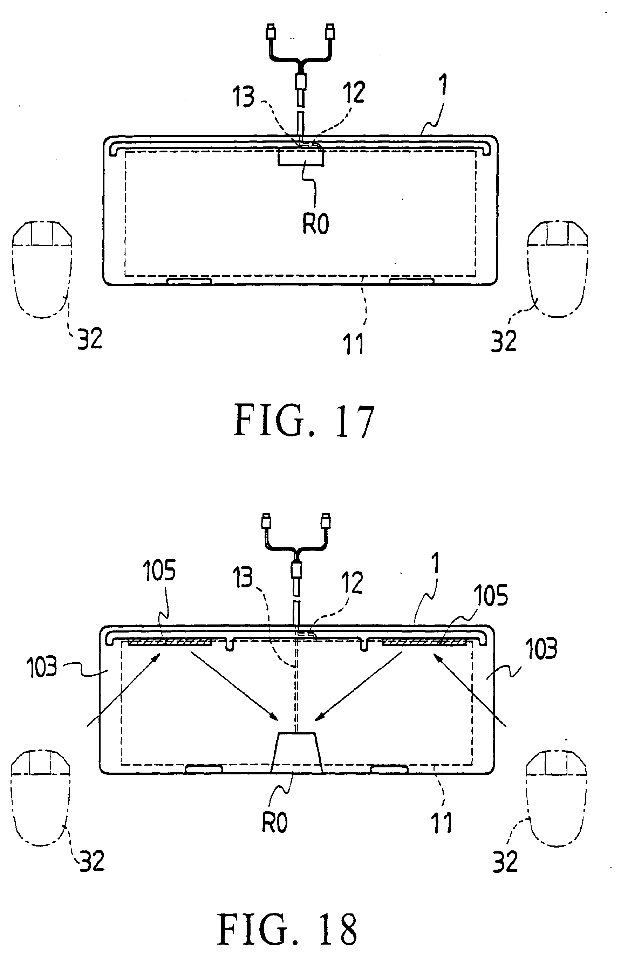

In the tenth embodiment pursuant to Fig. 17, the feature lies in that the ultrared or supersonic receiver R0 and the relay keyboard 1 may be embodied integral together, instead of being separately structured, and mounted on the upper side of the bottom chassis of the relay keyboard 1 to pick up emission signal coming from the independently installed ultrared or supersonic wireless mouse or trackball device 32.

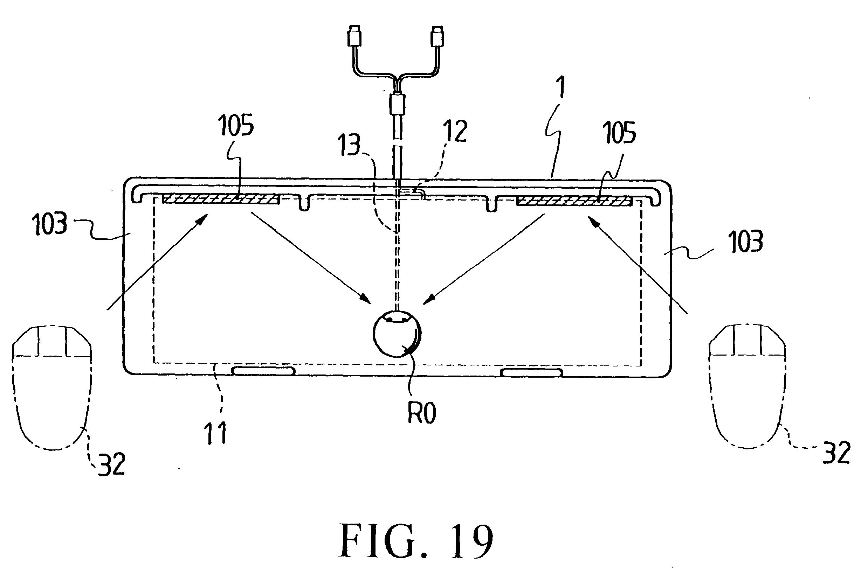

As represented in Fig. 18, the invention assembly of mouse with trackball device permitting selection of the position of a chosen receiver, executed in an eleventh embodiment, meant for wireless coupling, including ultrared and supersonic transmission mode of coupling, the architecture comprises essentially:
- Relay keyboard 1 which consists of operational pushkey on the surface complemented with corresponding pushkey circuit 11 built within which in turn is coupled to the main unit 2 by keyboard transmission wire 12, the keyboard 1 also featuring notch 103 for wireless transmission on either side or both sides of the bottom of the chassis thereof;
- Relay wire 13, located in a chosen spot inside the relay keyboard 1, with one end in the form of a row of wire lining by side by side with keyboard transmission wire 12, or being coaxial with a multiple-core cable and extended straight or by means of a socket/plug assembly to the main unit 2, while the other end is coupled to the ultrared or supersonic receiver R0 which may be united piece by piece with the relay keyboard 1, or as per the twelfth embodiment illustrated in Fig. 19, structured integral with said ultrared or supersonic receiver R0, by attaching to the upper side or lower side or any side of the chassis of the relay keyboard 1, with the bottom side of the relay keyboard 1, in addition, being furnished with one or more refractor 105 on the interior wall where suitable, the refractor 105 being composed of one or more ultrared or supersonic signal reflector of specific geometric configuration, mounted onto the inner wall of the relay keyboard 1, or alternatively, selected position on the inner wall of the relay keyboard 1 may be processed into specific configuration and applied with material responsive to ultrared ray or supersonic wave with reflection, or still such chosen position may be applied with material reflective to incident ultrared ray or supersonic wave, in order that by the intervention of such a refractor means 105 the ultrared or supersonic receiver R0 may pick up signal coming as emission from the ultrared or supersonic emission circuit associated with the ultrared or supersonic wireless mouse or trackball device 32 installed independently on either side or both sides or any other chosen location of the relay keyboard 1, arrangement as such will help prevent component-to-component shielding and interfering effects, so that the layout overall on the desktop may turn out neat and clean beyond what is possible ever before:
- Independently installed ultrared or supersonic wireless or trackball device 32.

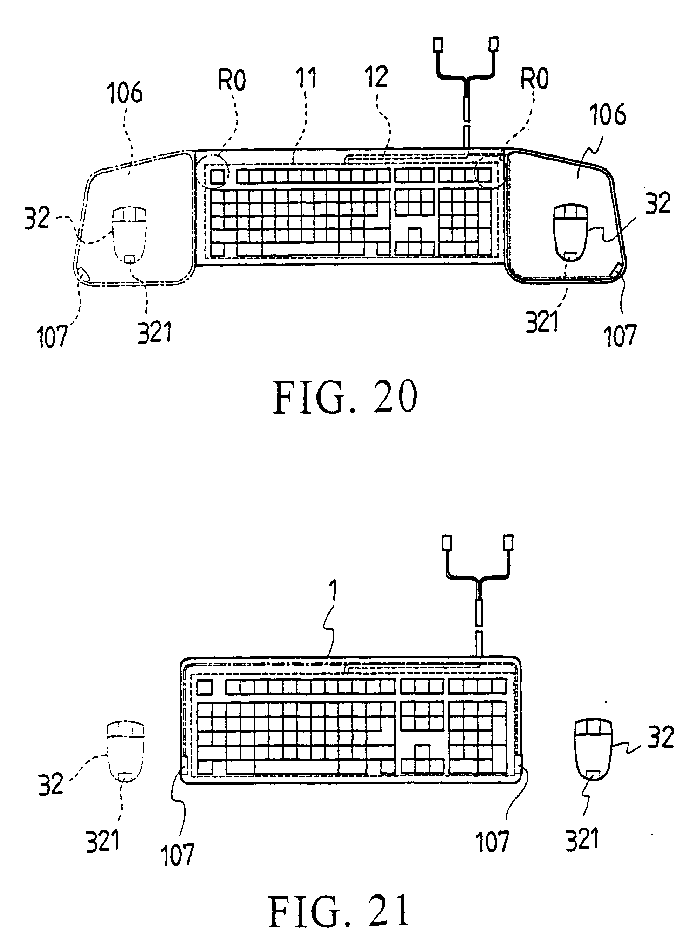

In a thirteenth embodiment of the invention assembly of mouse with trackball device permitting selection of the position of a chosen receiver, executed for wireless coupling such as ultrared or supersonic transmission, as illustrated in Fig. 20, the feature lies in making possible the individual or concurrent, separate or integrated construction of one or more mouse padding 106 on a chosen side or angular setting or both sides, of a chosen angular setting, to serve as an operation platform for an independently installed wireless mouse or trackball device 32, which bears a further feature in that a charging battery socket 107 may be installed on a chosen wall edge of aforementioned mouse padding 106, and that complemented with a charging coupling assembly 321 on a correspondent position on aforementioned ultrared or supersonic wireless mouse or trackball device 32, serving to offer charging of said ultrared or supersonic wireless mouse or trackball 32 during off-duty hours.

In a fourteenth embodiment of the invention assembly of mouse with trackball device permitting selection of the position of a chosen receiver, executed for wireless coupling, such as is illustrated in fig. 21, ultrared or supersonic transmission being included, the additional feature lies in that a charging socket assembly 107 relying its power source to the main unit interface power supply may be installed on one side or both sides, or on a wall edge of a chosen angular setting on one side or both sides of the relay keyboard 1, and that complemented with a charging coupling assembly 321 correspondently on aforementioned ultrared or supersonic wireless mouse or trackball device 32, serving to charge same device 32 during off-duty hours.

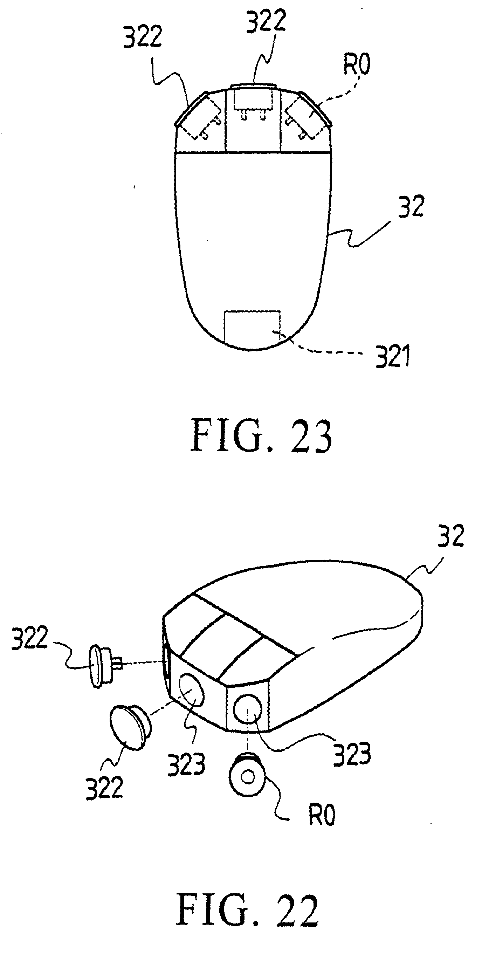

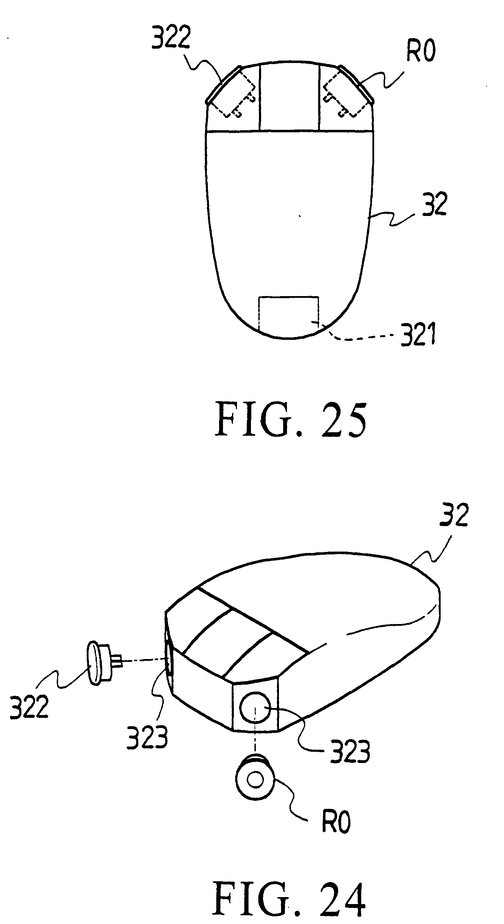

Additionally, the said independently installed ultrared or supersonic wireless mouse or trackball device 32, in addition to incorporating one set of ultrared or supersonic emission circuit assembly comprising LED components for ultrared or supersonic transmission purposes, mounted at chosen angular setting, may be structured so that:
(1) One or more additional ultrared signal receiving/transmitting channel is built on the ultrared or supersonic wireless mouse or trackball device 32 so as to constitute two or more ultrared or supersonic emission orientations; each Tx/Rx port being separate from the casing by an ultrared or supersonic partition board or block 322 so as to admit selective blocking of a part of the Tx/Rx port 323 in compliance with operational requirements whereby interference is minimized, as illustrated in Fig. 22 through Fig. 25;
(2) Two or more sets of ultrared or supersonic emission units sharing a same set of ultrared or supersonic emission circuit assembly are mounted at chosen angular setting to the ultrared or supersonic wireless mouse or trackball device, switching means may be provided in parallel where needed to allow for selective operation of the ultrared or supersonic emission units as executed through right-hand or left-hand manipulations, as illustrated in Fig. 22 through Fig. 25;
(3) Socket allowing for accommodation of the emission circuit assembly 321, provided in two or more sets at chosen angular setting is furnished at the emission head of the ultrared or supersonic mouse or trackball device 32, to allow for laying in place of emission circuit assembly 321 integral with socket/plug assembly where needed, on one side, while the other side is isolated by an insulation plug 322 for isolated protection;
(4) Apart from being expanded in a single dimension(ID), of the emission angle by one or two ultrared or supersonic emission units for the ultrared or supersonic wireless mouse or trackball 32, expansion of the emission angle to two dimensional perspective (2D) comprising three or more length by width extension is also made possible.

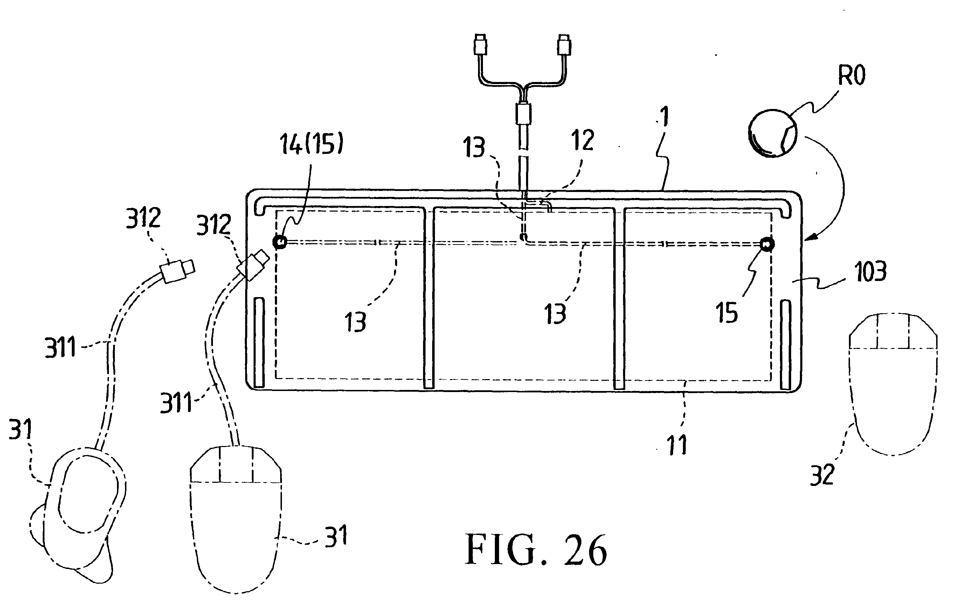

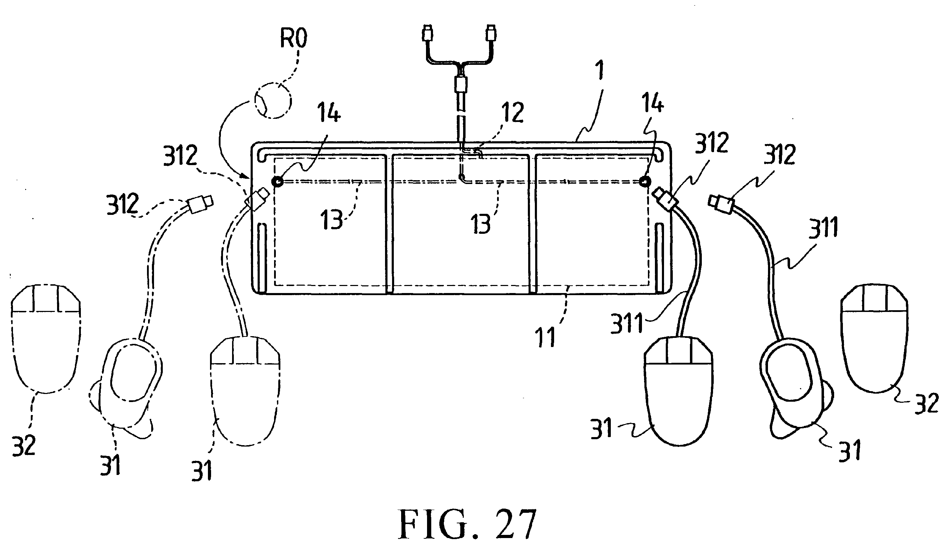

In addition to serving to match the ultrared or supersonic receiver R0, the conventional PS2, USB, SERIES or any other special purpose interface plug or socket assembly 14 or 15 may instead accommodate wired mouse or trackball device 31 where needed, for example, where it is impractical to make use of the independently installed wireless mouse or trackball device 32, so that the wireless and wired systems can be applied equally effectively on a same rationale; where in any of the aforementioned instances the conventional PS2, USB, SERIES or other special purpose interface plug or socket assembly 14 or 15 is employed singly or in two or more sets, it is also practicable to concurrently provide thereon one or more sets of (1) ultrared receiver or (2) supersonic receiver or (3) wired mouse or (4)trackball device 31, as represented in the fifteenth embodiment of the invention assembly of mouse with trackball device permitting selection of the position of a chosen receiver, illustrated in Fig. 26; said two or more sets of plug or socket assembly 14 or 15 may further be mounted at other chosen locations which could be on both sides or more sides, or still on one side plus at least another position of the relay keyboard 1 with at least one side or one position being furnished with two or more similar or dissimilar plug or socket assembly, as seen in the sixteenth embodiment illustrated in Fig. 27, of the invention assembly of mouse with trackball device permitting selection of the position of a chosen receiver;

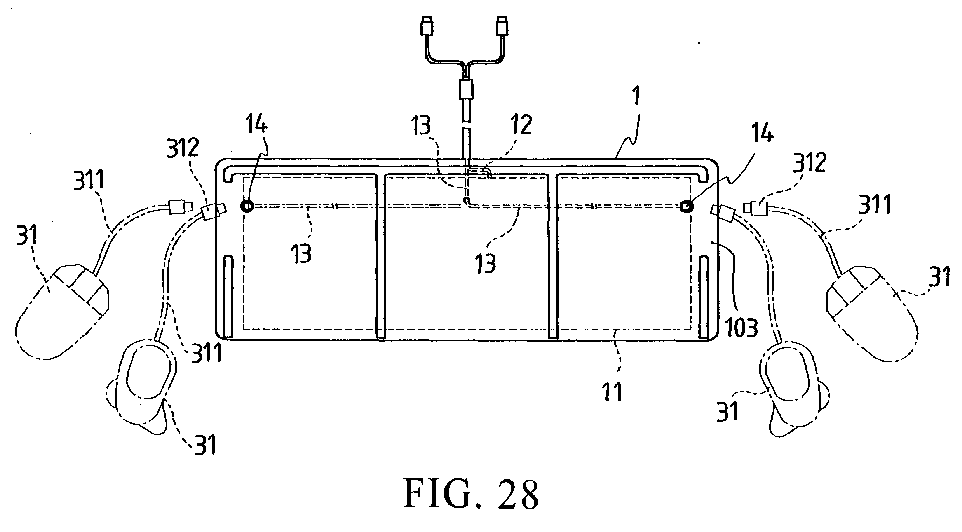

Moreover, with above-mentioned plug or socket assembly being furnished in two or more sets, each plug or socket may accommodate respectively non-homogenous wired mouse or trackball device 31, or any other electric control, and further be equipped with switching means where needed or appropriate, as prosecuted in a seventeenth embodiment of the invention assembly of mouse with trackball device permitting selection of the position of a chosen receiver, illustrated in Fig. 28;

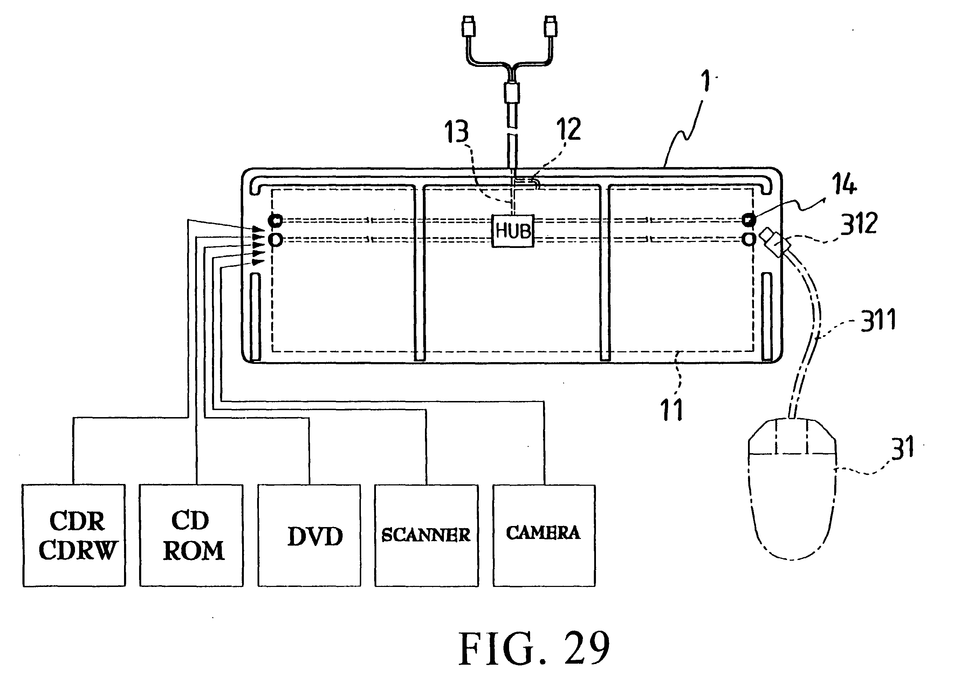

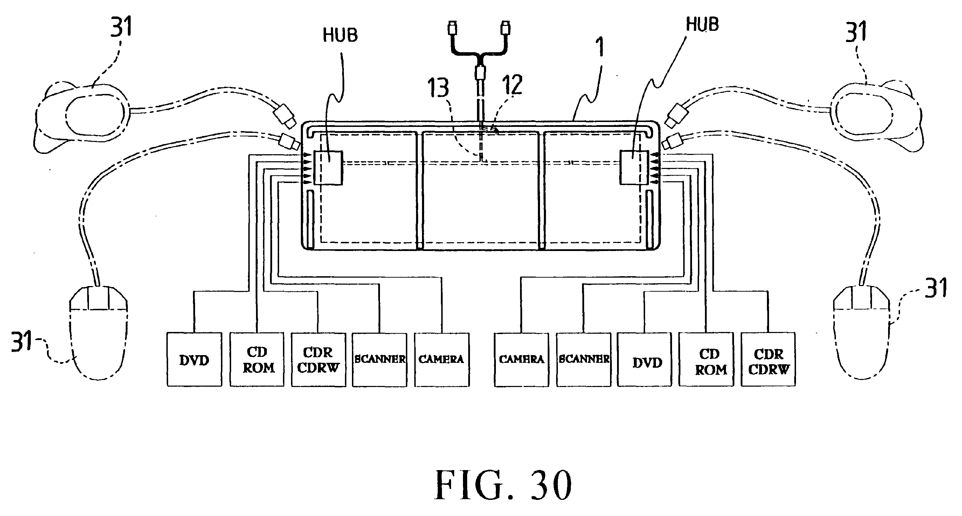

Where the aforementioned relay keyboard 1 is in the form of an in-built special purpose interface socket assembly comprising: universal series bus(USB) or high speed transmission interface IEEE 1394, or another interface socket assembly(HUB), it may accommodate setting of ultrared or supersonic receiver R0 or wired mouse or trackball device 31, or still interface access units such as DVD, CD,ROM, CDR, or CDRW or sweeping scanner, camera or microphone or speaker, similar audio/video input/output assemblies or other electric controls, as exemplified in an eighteenth embodiment of the invention assembly of mouse with trackball device permitting selection of the position of a chosen receiver, illustrated in Fig. 29; where, still the case is such that other positions available for selection are present on both sides or more sides or one side plus another location of the relay keyboard 1, it is also practicable for two or more sets of aforementioned USB or IEEE 1394, other interface socket assembly(HUB) with expansion capabilities may be accommodated to meet selection applications, as exemplified in a nineteenth embodiment of the invention assembly of mouse with trackball device permitting selection of the position of a chosen receiver, illustrated in Fig. 30.

Among the numerous embodiments realizable pursuant to the invention the so-called ultrared or supersonic wireless coupling mode of execution is characterized such that as associated with the relay keyboard 1, the ultrared receiver, including the ultrared detector; or the supersonic receiver, including the supersonic detector, may be structured in standalone housing possible for union by means including locking, engagement, bonding, hooking, retaining, vacuum suction, magnetic absorption positioning techniques or any other conventional technique for combination purposes so that positioning once finalized by selection may be prosecuted in place once for all, similar or dissimilar conventional PS2, USB, SERIES or other special purpose interface plug/socket assembly 14 may be employed to connect to relay wire 13 positioned on the relay keyboard 1 or instead the connection may be prosecuted straight by wire coupling; or still, both parties may be structured integrally on a same common housing; should aforementioned relay keyboard 1 and the ultrared or supersonic receiver R0 be mutually independent entities meant for selective combination where needed, then on one side or both sides of the relay keyboard 1 must be furnished with ad hoc position reserved for bonding, locking, engagement, dovetailing coupling, hooking, vacuum suction, magnetic absorption of the relevant socket/plug assembly, while in corresponding layout and way abutted by the edge there must be provided notched space good for ultrared or supersonic wireless transmission in order that once combined, the ultrared or supersonic wireless mouse or trackball device 32 may find themselves favorably positioned in place for transmission purpose, vis-a-vis the ultrared or supersonic receiver R0; the same teaching is true as of integrated symbiotic structure.

The various embodiments, executions of the invention assembly of mouse with trackball device permitting selection of the position of a chosen receiver in the operation of aforementioned ultrared or supersonic wireless coupling transmission are equally applicable to notebook computers whereof the housing and the keyboard are integrated together, more specifically, in Notebook applications, the relay wire 13 is remodeled to connection inside the housing and the keyboard, with one end in line with the ultrared or supersonic receiver R0 which is equipped with wire cords for coupling to either side, right or left, of the keyboard compartment of the notebook computer in question.

All that has been disclosed hereinbefore serves but to illustrate some representative models of the present invention in terms of its technical contexts, it must be noted, however, that attempts, eventually successful, to modify, revise, remodel, otherwise treat the invention without departing from the scope of the teachings covered hereunder are possibly realizable by parties mediocrely skilled in the art. Assembly of mouse with trackball device permitting selection of the position of a chosen receiver according to Claim 1, characterized in that when being embodyed in wireless transmission coupling system, it is possible the individual or concurrent, separate or integrated construction of one or more mouse padding 106 on a chosen side or angular setting or both sides, of a chosen angular setting, to serve as an operation platform for an independently installed wireless mouse or trackball device 32, which bears a further feature in that a charging battery socket 107 may be installed on a chosen wall edge of aforementioned mouse padding 106, and that complemented with a charging coupling assembly 321 on a correspondent position on aforementioned ultrared or supersonic wireless mouse or trackball device 32, serving to offer charging of said ultrared or supersonic wireless mouse or trackball 32 during off-duty hours.

## Claims

1. Assembly of mouse with trackball device permitting selection of the position of a chosen receiver, featuring characteristically incorporation of a wired interface or wireless receiver assembly specific for mouse or trackball device to a wired outputting or wireless outputting relay keyboard, complete with relevant mechanism accommodating optional matching in a right-hand or left-hand direction or otherwise direction, that is, wired or wireless outputting relay keyboard as a functional relay way between a receiver for a mouse or trackball device and the main unit.

2. Assembly of mouse with trackball device permitting selection of the position of a chosen receiver according to Claim 1, whereof said wired coupling system comprises:
- Relay keyboard 1 which consists of operational key 10 on the surface against a corresponding pushkey circuit 11 which is coupled to the main unit 2 by keyboard transmission wire 12, the relay keyboard 1 featuring wire retaining notches 102 on both sides of the bottom chassis 101, pointing leftwards or rightwards;
- Relay wire 13, being furnished on chosen locations inside the relay keyboard 1, lining up side by side with keyboard transmission wire 12 or alternatively coaxially symbiotic with multiple-core cable for extension to the main unit 2 straight or through plug socket coupling technique, and coupling to the relay wire 13 being by means of running one or more, homogenous or dissimilar conventional PS2, USB, SERIES or otherwise special purpose interface socket 14, straight in series or in parallel, way from a central position inside the relay keyboard;
- Independently installed wired mouse or trackball device 31, whereof a plug 312 is provided on the end to which a transmission wire 31 is attaches for coupling with aforementioned coupling socket 14;
Structured accordingly, the plug 312 for the independently installed wired mouse or trackball device 31 may be coupled to the coupling socket 14 for the relay wire 13 way from the right side or left side or any otherwise side of the relay keyboard 1, as from the setting point, so that the transmission wire 311 may be retained in the retaining notch 102 on the bottom of the relay keyboard 1.

3. Assembly of mouse with trackball device permitting selection of the position of a chosen receiver according to Claim 1, whereof the wireless coupling system comprises:
- Relay keyboard 1 which consists of operational key 10 on the surface against a corresponding key circuit 11 which is coupled to the main unit 2 by way of a keyboard transmission wire 12, and the relay keyboard 1 featuring a notch 10 to facilitate wireless transmission on either side, or both sides of the chassis bottom whereof;
- Relay wire 13, concealed in a chosen position inside the relay keyboard 1, which one end thereof coupled to the ultrared or supersonic receiver R0, the other end thereof lining up side by side with keyboard transmission wire 12 or coaxial with a multiple-core cable for extension straight or by way of plug/socket assembly to the main unit 2, the relay wire 13 being available for coupling to either side of the relay keyboard 1, left or right, optionally from a point within the housing of the relay keyboard 1, aforementioned ultrared or supersonic receiver R0 being coupled to the right side or left side of the relay keyboard 1 for ultimate coupling to the wireless transmission notch 103 where signal be it ultrared or supersonic wireless mouse or trackball device 32 is received;
- Independently installed ultrared or supersonic wireless mouse or trackball device 32;
Structured accordingly, signal from ultrared or supersonic emission circuit sourced to the independently installed ultrared or supersonic wireless mouse or trackball device 32 may be emitted to aforementioned supersonic or ultrared device R0, accomplishing thereby wireless coupling whereof keyboard 1 serves as an operational relay.

4. Assembly of mouse with trackball device permitting selection of the position of chosen receiver according to Claim 1, whereof the wireless coupling system comprises:
- Relay keyboard 1 which consists of operational pushkey 10 on the surface against corresponding pushkey circuit 11 built within, said pushkey circuit 11 being coupled to the main unit 2 by a keyboard transmission wire 12, the keyboard 1 further featuring a wire retaining notch 102 on chosen location on the chassis board 101, complemented with wireless transmission notch 103 provided on either side or both sides of the chassis;
- Relay wire 13, provided exposed on the relay keyboard 1 and as stretched out from the relay keyboard 1, with one end coupled to the ultrared or supersonic receiver R0, and the other end coupled to the main unit 2 by way of passage across hole 100, in parallel with keyboard transmission wire 12, or coaxially by extension with multiple-core cable straight or through plug/socket assembly, the relay wire 13 being retained in position across the retaining notch 102 on the bottom of the relay keyboard 1, while above-mentioned ultrared or supersonic receiver R0 is mounted on the notch 103 on the left side or right side of the relay keyboard 1 to receive signal incoming from the ultrared or supersonic wireless mouse or trackball device 32;
- Independently installed ultrared or supersonic wireless mouse or trackball device.

5. Assembly of mouse with trackball device permitting selection of the position of a chosen receiver according to Claim 4, wherein relay wire 13 may further dispose of one or more similar or dissimilar, conventional PS2, USB, SERIES or otherwise interface socket 14 may be laid straight or in parallel or by way of coupling interface, in a chosen central position of the relay keyboard with a plug R04 which may be coupled to said coupling socket 14 on one end of the transmission wire R03 of the ultrared or supersonic receiver R0, for optional mounting and coupling to a wireless transmission notch 103 on the right side or left side of the relay keyboard 1, allowing for coupling from the relay wire 13 by way of the socket 14.

6. Assembly of mouse with trackball device permitting selection of the position of a chosen receiver according to Claim 4, **characterized** that it may further present a plurality of pin-hole 104, laid out geometrically, in annular or otherwise setting, on chosen location on the wireless transmission notches 103 on either or both sides of the relay keyboard 1, and that complemented with one or more correspondent pin-pillar R01 on the bottom of the housing of the ultrared or supersonic receiver R0, so that by matching pin-pillar R01 with pin-hole 104, it is made possible to choose a desired signal pickup direction and to obtain stable securing effects.

7. Assembly of mouse with trackball device permitting selection of the position of a chosen receiver according to Claim 5, which may also present one or more annularly deployed or otherwise geometrically distributed pin-hole 104 on chosen locations on the notch 103 on the right side or left side of the relay keyboard 1, and that complemented with similarly one or more pin-pillar R01 present on the bottom of the housing of independently installed ultrared or supersonic receiver R0, so that random coupling of pin-pillar R01 with pin-hole 104 will serve to set the signal pickup direction, it is further possible to have one or more similar or dissimilar conventional PS2, USB, SERIES or any other special purpose interface socket 14, meant for forthright parallel or coupled interface, laid at a central position inside the relay keyboard 1, to be coupled by a plug R04 provided on one end of the transmission wire R03 of the ultrared or supersonic receiver R0, to facilitate random selection of and coupling to the wireless transmission notch 103 on the left side of right side of the relay keyboard 1 and as associated by the socket 14 with the relay wire 13.

8. Assembly of mouse with trackball device permitting selection of the position of a chosen receiver according to Claim 1, whereof the wireless coupling system comprises:
- Relay keyboard 1 which consists of operational pushkey on the surface corresponded with a pushkey circuit 11 within which in turn is coupled to the main unit 2 by way of a keyboard transmission wire 12, the keyboard 1 further featuring a wireless transmission notch 103 present on either side or both sides of the housing of the relay keyboard 1;
- Relay wire 13, equipped on chosen location within the relay keyboard 1, whereof the mid-terminal lines up side by side with the keyboard transmission wire 12 or, being coaxial with a multiple-core cable, it is extended straight to the main unit 2 or by way of a socket/plug assembly thereto, while the other end of the relay wire 13 is coupled to a chosen location in the neighborhood of the wireless transmission notch 103, where one or more similar or dissimilar conventional PS2, notch 103, USB, SERIES or any other special purpose interface socket 15, meant for direct parallel or roundabout coupling interconnection, are attached for coupling to correspondingly provided PS2, USB, SERIES or other special purpose interface socket 15 on aforementioned right side or left side, by means of an ultrared or supersonic receiver R0 which incorporates PS2, USB, SERIES or other special purpose interface plug R02;
- Independently installed ultrared or supersonic wireless mouse or trackball device 32.

9. Assembly of mouse with trackball device permitting selection of the position of a chosen receiver according to Claim 8,which may further be disposed of a plurality of pin-hole 104 on chosen location on the peripheral of the PS2, USB, SERIES or special purpose interface socket 15 associated with the relay keyboard 1, and that corresponded with one or more pin-pillar R01 deployed on the bottom of housing of the ultrared or supersonic receiver R0, so that, by matching said pin-pillar R01 with said pin-pillar R01 with said pin-hole 104, it is possible to random set signal emission angular setting in reliable bonding security.

10. Assembly of mouse with trackball device permitting selection of the position of a chosen receiver according to claim 1 , whereof the wireless coupling system comprises:
- Relay keyboard 1 which consists of an operational pushkey 1 corresponded with a pushkey circuit 11 which is coupled by means of a keyboard transmission wire 12 to the main unit 2, the keyboard 1 allowing for a more spacious space reserved for a greater wireless transmission notch 103 on wither side or both sides of the bottom of the housing of the relay keyboard 1;
- Relay wire 13 mounted at a chosen location within the relay keyboard 1, with one end lining up side by side with keyboard transmission wire 12, or, being coaxial with a multiple-core cable for extension to or by way of a plug/socket assembly to the main unit 2, while the other end is coupled to a similar or dissimilar, conventional PS2, USB, SERIES or other special purpose interface socket 15, straight in parallel or through interface coupling technique, said PS2, USB, SERIES or other special purpose interface socket 15 being available for mounting centrally on the relay keyboard 1 or any other chosen location where needed, which in addition, is fit for insert coupling with any ultrared or supersonic pickup receiver R0 furnished with a counterpart plug R02 corresponding thereto;
- Independently installed ultrared or supersonic wireless mouse or trackball device 32.

11. Assembly of mouse with trackball device permitting selection of the position of a chosen receiver according to Claim 10, which may further present a plurality of pin-hole 104, in annular or otherwise geometric layout, on chosen location around the PS2, USB, SERIES or otherwise special purpose socket 15 of the relay keyboard 1, complemented with one or more pin-pillar R01, on correspondent locations on the bottom of housing of the ultrared or supersonic receiver R0, so that coupling of both pin-pillar R01 and pin-hole 104 with each other will suffice to random set signal emission direction in stable security.

12. Assembly of mouse with trackball device permitting selection of the position of a chosen receiver according to Claim 10, wherein the said ultrared or supersonic receiver R0 and the relay keyboard 1 may be embodied integral together, instead of being separately structured, and mounted on the upper side of the bottom chassis of the relay keyboard 1 to pick up emission signal coming from the independently installed ultrared or supersonic wireless mouse or trackball device 32.

13. Assembly of mouse with trackball device permitting selection of the position of a chosen receiver according to claim 1, whereof the wireless coupling system comprises:
- Relay keyboard 1 which consists of operational pushkey on the surface complemented with corresponding pushkey circuit 11 built within which in turn is coupled to the main unit 2 by keyboard transmission wire 12, the keyboard 1 also featuring notch 103 for wireless transmission on either side or both sides of the bottom of the chassis thereof;
- Relay wire 13, located in a chosen spot inside the relay keyboard 1, with one end in the form of a row of wire lining by side by side with keyboard transmission wire 12, or being coaxial with a multiple-core cable and extended straight or by means of a socket/plug assembly to the main unit 2, while the other end is coupled to the ultrared or supersonic receiver R0 and is provided by attaching to the upper side or lower side or any side of the chassis of the relay keyboard 1, with the bottom side of the relay keyboard 1, in addition, being furnished with one or more refractor 105 on the interior wall where suitable, the refractor 105 being composed of one or more ultrared or supersonic signal reflector of specific geometric configuration, mounted onto the inner wall of the relay keyboard 1, or alternatively, selected position on the inner wall of the relay keyboard 1 may be processed into specific configuration and applied with material responsive to ultrared ray or supersonic wave with reflection, or still such chosen position may be applied with material reflective to incident ultrared ray or supersonic wave, in order that by the intervention of such a refractor means 105 the ultrared or supersonic receiver R0 may pick up signal coming as emission from the ultrared or supersonic emission circuit associated with the ultrared or supersonic wireless mouse or trackball device 32 installed independently on either side or both sides or any other chosen location of the relay keyboard 1, arrangement as such will help prevent component-to-component shielding and interfering effects, so that the layout overall on the desktop may turn out neat and clean beyond what is possible ever before:
- Independently installed ultrared or supersonic wireless or trackball device 32.

14. Assembly of mouse with trackball device permitting selection of the position of a chosen receiver according to claim 13, whereof said ultrared or supersonic receiver R0 may be executed integral with the relay keyboard 1 on a part by part basis, or alternatively be executed structurally integral with said ultrared or supersonic receiver R0 and as mounted on the upper side or lower side, or any location of the bottom chassis of the relay keyboard 1.

15. Assembly of mouse with trackball device permitting selection of the position of a chosen receiver according to Claim 1, **characterized in that** when being embodyed in wireless transmission coupling system, a charging socket assembly 107 relying its power source to the main unit interface power supply may be installed on one side or both sides, or on a wall edge of a chosen angular setting on one side or both sides of the relay keyboard 1, and that complemented with a charging coupling assembly 321 correspondently on aforementioned ultrared or supersonic wireless mouse or trackball device 32, serving to charge same device 32 during off-duty hours.

16. Assembly of mouse with trackball device permitting selection of the position of a chosen receiver according to claim 3, whereof the independently installed ultrared or supersonic wireless mouse or trackball device 32 may be arranged in any manner set forth below other than having an ultrared or supersonic emission circuit assembly which consists of ultrared or supersonic emission units mounted at a chosen angular setting and comprising straight LED elements;
(1) One or more additional ultrared signal receiving/ transmitting channel is built on the ultrared or supersonic wireless mouse or trackball device 32 so as to constitute two or more ultrared or supersonic emission orientations; each Tx/Rx port being separate from the casing by an ultrared or supersonic partition board or block 322 so as to admit selective blocking of a part of the Tx/Rx port 323 in compliance with operational requirements whereby interference is minimized;
(2) Two or more sets of ultrared or supersonic emission units sharing a same set of ultrared or supersonic emission circuit assembly are mounted at chosen angular setting to the ultrared or supersonic wireless mouse or trackball device, switching means may be provided in parallel where needed to allow for selective operation of the ultrared or supersonic emission units as executed through right-hand or left-hand manipulations;
(3) Socket allowing for accommodation of the emission circuit assembly 321, provided in two or more sets at chosen angular setting is furnished at the emission head of the ultrared or supersonic mouse or trackball device 32, to allow for laying in place of emission circuit assembly 321 integral with socket/plug assembly where needed, on one side, while the other side is isolated by an insulation plug 322 for isolated protection;
(4) Apart from being expanded in a single dimension(ID), of the emission angle by one or two ultrared or supersonic emission units for the ultrared or supersonic wireless mouse or trackball 32, expansion of the emission angle to two dimensional perspective (2D) comprising three or more length by width extension is also made possible.

17. Assembly of mouse with trackball device permitting selection of the position of a chosen receiver according to Claim 1, wherein when conventional PS2, USB, SERIES or any other special purpose interface plug or socket assembly 14 or 15 is used, in addition to serving to match the ultrared or supersonic receiver R0, wired mouse or trackball device 31 may, if necessary(where it is impractical to make use of the independently installed wireless mouse or trackball device 32) used for wired or wireless application choices.

18. Assembly of mouse with trackball device permitting selection of the position of a chosen receiver according to Claim 1, wherein when any of the aforementioned instances the conventional PS2, USB, SERIES or other special purpose interface plug or socket assembly 14 or 15 is employed singly or in two or more sets, it is also practicable to concurrently provide thereon one or more sets of (1) ultrared receiver or (2) supersonic receiver or (3) wired mouse or (4)trackball device 31

19. Assembly of mouse with trackball device permitting selection of the position of a chosen receiver according to Claim 1, wherein when two or more sets of plug or socket assembly 14 or 15 may further be mounted at other chosen locations which could be on both sides or more sides, or still on one side plus at least another position of the relay keyboard 1 with at least one side or one position being furnished with two or more similar or dissimilar plug or socket assembly.

20. Assembly of mouse with trackball device permitting selection of the position of a chosen receiver according to Claim 1, wherein when two or more sets plug or socket assembly being furnished, each plug or socket may accommodate respectively non-homogenous wired mouse or trackball device 31, or any other electric control, and further be equipped with switching means where needed or appropriate.

21. Assembly of mouse with trackball device permitting selection of the position of a chosen receiver according to Claim 1, wherein if relay keyboard 1 is in the form of an in-built special purpose interface socket assembly comprising: universal series bus(USB) or high speed transmission interface IEEE 1394, or another interface socket assembly(HUB), it may accommodate setting of ultrared or supersonic receiver R0 or wired mouse or trackball device 31, or still interface access units such as DVD, CD, ROM, CDR, or CDRW or sweeping scanner, camera or microphone or speaker, similar audio/video input/output assemblies or other electric controls.

22. Assembly of mouse with trackball device permitting selection of the position of a chosen receiver according to Claim 1, wherein if other positions available for selection are present on both sides or more sides or one side plus another location of the relay keyboard 1, it is also practicable for two or more sets of aforementioned USB or IEEE 1394, other interface socket assembly(HUB) with expansion capabilities may be accommodated to meet selection applications.

23. Assembly of mouse with trackball device permitting selection of the position of a chosen receiver according to Claim 1, wherein when said assembly is in the form of the so-called ultrared or supersonic wireless coupling, the ultrared receiver(including the ultrared detector); or the supersonic receiver(including the supersonic detector) and the said relay keyboard 1 may be structured in standalone housing possible for union by means including locking, engagement, bonding, hooking, retaining, vacuum suction, magnetic absorption positioning techniques or any other conventional technique for combination purposes so that positioning once finalized by selection may be prosecuted in place once for all, similar or dissimilar conventional PS2, USB, SERIES or other special purpose interface plug/socket assembly 14 may be employed to connect to relay wire 13 positioned on the relay keyboard 1 or instead the connection may be prosecuted straight by wire coupling; or still, both parties may be structured integrally on a same common housing; should aforementioned relay keyboard 1 and the ultrared or supersonic receiver R0 be mutually independent entities meant for selective combination where needed, then on one side or both sides of the relay keyboard 1 must be furnished with ad hoc position reserved for bonding, locking, engagement, dovetailing coupling, hooking, vacuum suction, magnetic absorption of the relevant socket/plug assembly, while in corresponding layout and way abutted by the edge there must be provided notched space good for ultrared or supersonic wireless transmission in order that once combined, the ultrared or supersonic wireless mouse or trackball device 32 may find themselves favorably positioned in place for transmission purpose, vis-a-vis the ultrared or supersonic receiver R0; the same teaching is true as of integrated symbiotic structure.

24. Assembly of mouse with trackball device permitting selection of the position of a chosen receiver according to Claim 1, wherein the various embodiments, executions of the invention assembly of mouse with trackball device permitting selection of the position of a chosen receiver in the operation of ultrared or supersonic wireless coupling transmission are equally applicable to notebook computers whereof the housing and the keyboard are integrated together, more specifically, in Notebook applications, the relay wire 13 is remodeled to connection inside the housing and the keyboard, with one end in line with the ultrared or supersonic receiver R0 which is equipped with wire cords for coupling to either side, right or left, of the keyboard compartment of the notebook computer in question.
